**Europäisches Patentamt**

**European Patent Office**

**Office européen des brevets**

(19)

(11) **EP 1 161 975 A2**

(12) **EUROPEAN PATENT APPLICATION**

(43) Date of publication:
**12.12.2001 Bulletin 2001/50**

(51) Int Cl.⁷: **A63F 13/10**

(21) Application number: **01113752.8**

(22) Date of filing: **05.06.2001**

| | |
|---|---|
| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI** | (72) Inventors:<br>• **Magoshi, Hidetaka**<br>**Minato-ku, Tokyo 107-0052 (JP)**<br>• **Oka, Masaaki**<br>**Minato-ku, Tokyo 107-0052 (JP)** |
| (30) Priority: **06.06.2000 JP 2000169820**<br>**04.06.2001 JP 2001168766** | (74) Representative:<br>**Manitz, Finsterwald & Partner GbR**<br>**Postfach 31 02 20**<br>**80102 München (DE)** |
| (71) Applicant: **Sony Computer Entertainment Inc.**<br>**Tokyo 107-0052 (JP)** | |

(54) **Entertainment apparatus having image and sound controlling system**

(57)     An instruction information generator 112 generates first object instruction information for controlling an image displayed on a display device and/or first sound instruction information for controlling a sound outputted from a speaker in accordance with an analytical result sent from an input controller 111. The instruction information generator 112 generates second object instruction information and/or second sound instruction information indicative of occurrence of a specific state in accordance with the relationship between the game player's operation and the progress of the game. An object discriminator 113 performs restriction determination processing to each object in accordance with first or second object instruction information. A graphic controller performs graphic processing of the object in accordance with the determination result. A sound data discriminator 116 performs restriction determination processing to each sound element in accordance with first or second sound instruction information. A sound controller 117 performs synthesis of sound data in accordance with the determination result.

FIG. 2

## Description

### CROSS-REFERENCE TO RELATED APPLICATIONS

This application is based upon and claims the benefit of priority from the prior Japanese Patent Application No. 2000-169820, filed June 6, 2000, and 2001-168766, filed June 4, 2001, the entire contents of both of which are incorporated herein by reference.

### BACKGROUND OF THE INVENTION

### Field of the Invention

The present invention relates to an entertainment apparatus that generates information indicative of an image to be displayed on a display device and a sound to be outputted from a speaker and outputs the generated information, and particularly relates to an entertainment apparatus having an image and sound controlling system for controlling generated information in accordance with a predetermined condition.

### Description of the Related Art

As an example of the entertainment apparatus that generates information indicative of an image and a sound and provides them to one or a plurality of users, there is a video game apparatus. This kind of video game displays the image on a predetermined display device using information stored in a given storage medium or outputs the sound from a given speaker in accordance with the progress of the game. Hence, in general, the fixed image is displayed and the fixed sound is outputted in accordance to the progress of the game.

The performance of this kind of game has been rapidly improved by the recent development of technology. In accordance with the improvement of performance, the number of kinds of images to be displayed on the display device and the amount of images are increased. In connection with the sound, various kinds of sounds can be outputted similarly.

However, an increase in the various kinds of images and the mount thereof and complicated sounds outputted from the speaker are not always comfortable to a person who controls the video game to play the game (hereinafter referred to as "game player"). In some cases, the game player feels these various kinds of images and sounds as hindrances in the way of progressing the game. This is caused by the factors such as player's preference, physical condition, environment for playing the game, and like.

### SUMMARY OF THE INVENTION

It is an object of the present invention is to provide a technique for making it possible for the user to visually identify the image and to hear the sound comfortably, and an entertainment apparatus using the technique by solving the aforementioned problems.

According to an aspect of the present invention, there is provided an information processing apparatus connectable to an output apparatus for outputting information, the information processing apparatus comprising: a first processor for generating instruction information in accordance with a restriction request from a user on an information output from the output apparatus; a second processor for generating data reflecting the instruction information, in accordance with a preset condition; and a data feeder for feeding the generated data to the output apparatus so that the output apparatus outputs information in accordance with the fed data.

It may be arranged that the information comprises at least one of an image and a sound. This controls the at least one of an image and a sound provided in accordance with the instruction from the user of the information processing apparatus. Accordingly, the user can view the image and hear the sound comfortably in accordance with player's preference, physical condition, and environment.

It may be arranged that the first processor generates the instruction information indicating a degree of restriction according to the restriction request, and the second processor compares the instruction information with information assigned to the at least one of an image and a sound in advance and indicating a degree of necessity for outputting and generates the data according to a comparison result.

It may be arranged that the information processing apparatus further comprises a memory for storing levels of importance indicating degrees of necessity for displaying for each of configuration components that form the image, the first processor generates the instruction information indicating a degree of the restriction request, and the second processor compares a degree of level of importance for each configuration component with reference to the memory and restricts the image according to the comparison result. In this case, the second processor generates the data in order to restrict the configuration component whose degree of the level of importance is lower than that of the instruction information using at least one of processing for reducing the number of elements that form the configuration components, processing for changing colors assigned to the configuration elements in advance, processing for synthesizing the configuration components with a fog, and processing for erasing the configuration components.

It may be arranged that the information processing apparatus further comprises a memory for storing levels of importance indicating degrees of necessity for outputting for each of sound elements that form the sound, the first processor generates the instruction information indicating a degree of the restriction request, and the second processor compares a degree of level of importance for each sound element with reference to the memory and generates the data according to the comparison result. In this case, the second processor generates the data in order that a sound level outputted from the output apparatus is reduced in connection with the sound element where the degree of the level of importance is lower than that of the instruction information.

According to another aspect of the present invention, there is provided a method executed in an information processing apparatus connectable to an output apparatus for outputting information, the method comprising the steps of: generating instruction information in accordance with a restriction request from a user on an information output from the output apparatus; generating data reflecting the instruction information, in accordance with a preset condition; and feeding the generated data to the output apparatus so that the output apparatus outputs information in accordance with the fed data.

According to another aspect of the present invention, there is provided a computer program operational on a computer, the computer connectable to an output apparatus for outputting information, the computer program comprising the steps of: generating instruction information in accordance with a restriction request from a user on an information output from the output apparatus; generating data reflecting the instruction information, in accordance with a preset condition; and feeding the generated data to the output apparatus so that the output apparatus outputs information in accordance with the fed data.

It may be arranged that the computer program is stored in a computer readable storage medium.

According to another aspect of the present invention, there is provided a storage medium having computer readable program code means embodied in a medium, the computer readable program code means comprising: computer readable program code means for generating instruction information in accordance with a restriction request from a user on an information output from an output apparatus; computer readable program code means for generating data reflecting the instruction information, in accordance with a preset condition; and computer readable program code means for feeding the generated data to the output apparatus so that the output apparatus outputs information in accordance with the fed data.

According to another aspect of the present invention, there is provided a semiconductor device provided in an information processing apparatus, the information processing apparatus connectable to an output apparatus for outputting information, the semiconductor device comprising: means for generating instruction information in accordance with a restriction request from a user on an information output from the output apparatus; means for generating data reflecting the instruction information, in accordance with a preset condition; and means for feeding the generated data to the output apparatus so that the output apparatus outputs information in accordance with the fed data.

According to another aspect of the present invention, there is provided an information processing apparatus connectable to an output apparatus for outputting information to a user and to an input apparatus for receiving an operation by the user, the information processing apparatus comprising: a generator for generating data indicating information and supplying the generated data to the output apparatus, whereby providing information that complies with a predetermined scenario to the user; a first processor for detecting an occurrence of a specific state according to an instruction input from the user via the input apparatus and the progress of the scenario; and a second processor for restricting generation of the data indicating the information by the generator according to a preset condition when the specific state occurs.

It may be arranged that the information comprises at least one of an image and a sound. This controls the at least one of an image and a sound that are provided in accordance with the relationship between the user's operation and the progress of the scenario. Accordingly, the user can enjoy the comfortable viewing and hearing environment without providing an instruction while viewing the image and hearing the sound.

It may be arranged that the second processor generates the instruction information indicating a degree of restriction according to the specific state and compares the instruction information with information assigned to the at least one of an image and a sound in advance and indicating a degree of necessity for outputting, and restricts the generating of data by the generator according to the comparison result.

It may be arranged that the information processing apparatus further comprises a memory for storing levels of importance indicating degrees of necessity for displaying for each of configuration components that form the image, the second processor generates the instruction information indicating a degree of the restriction request and compares a degree of level of importance for each configuration component with reference to the memory, and restricts the generating of data by the generator according to the comparison result. In this case, the second processor restricts the generating of data by the generator in order to restrict the configuration component whose degree of the level of importance is lower than that of the instruction information using at least one of processing for reducing the number of elements that form the configuration components, processing for changing colors assigned to the configuration elements in advance, processing for synthesizing the configuration components with a fog, and processing for erasing the configuration components.

It may be arranged that the information processing apparatus further comprises a memory for storing levels of importance indicating degrees of necessity for outputting for each of sound elements that form the sound, the second processor generates the instruction information indicating a degree of the restriction request and compares a degree of level of importance for each sound element with reference to the memory, and restricts the generating of data by the generator according to the comparison result. In this case, the second processor restricts the generating of data by the generator such that a sound level outputted from the output apparatus is reduced in connection with the sound element where degree of the level of importance is lower than that of the instruction information.

It may be arranged that when the predetermined scenario is for a moving object operation game, the first processor detects an occurrence of the specific state according to at least one of a velocity of a moving object that is operated by the user, a viewpoint of the user, and a visual field of the user.

According to another aspect of the present invention, there is provided a method executed in an information processing apparatus connectable to an output apparatus for outputting information to a user and an input apparatus for receiving an operation by the user, the method comprising the steps of: generating data indicating information and supplying the generated data to the output apparatus, whereby providing information that complies with a predetermined scenario to the user; detecting an occurrence of a specific state according to an instruction input from the user via the input apparatus and the progress of the scenario; and restricting generation of the data indicating the information by the generator according to a preset condition when the specific state occurs.

According to another aspect of the present invention, there is provided a computer program operational on a computer, the computer connectable to an output apparatus for outputting information to a user and to an input apparatus for receiving an operation by the user, the computer program comprising the steps of: generating data indicating information and supplying the generated data to the output apparatus, whereby providing information that complies with a predetermined scenario to the user; detecting an occurrence of a specific state according to an instruction input from the user via the input apparatus and the progress of the scenario; and restricting generation of the data indicating the information by the generator according to a preset condition when the specific state occurs.

It may be arranged that the computer program is stored in a computer readable storage medium.

According to another aspect of the present invention, there is provided a storage medium having computer readable program code means embodied in a medium, the computer readable program code means comprising: computer readable program code means for generating data indicating information and supplying the generated data to an output apparatus, whereby providing information that complies with a predetermined scenario to a user; computer readable program code means for detecting an occurrence of a specific state according to an instruction input from the user via the input apparatus and the progress of the scenario; and computer readable program code means for restricting generation of the data indicating the information by the generator according to a preset condition when the specific state occurs.

According to another aspect of the present invention, there is provided a semiconductor device provided in an entertainment apparatus, the entertainment apparatus connectable to an output apparatus for outputting information to a user and to an input apparatus for receiving an operation by the user, the semiconductor device comprising: means for generating data indicating information and supplying the generated data to the output apparatus, whereby providing information that complies with a predetermined scenario to the user; means for detecting an occurrence of a specific state according to an instruction input from the user via the input apparatus and the progress of the scenario; and means for restricting generation of the data indicating the information by the generator according to a preset condition when the specific state occurs.

BRIEF DESCRIPTION OF THE DRAWINGS

These objects and other objects and advantages of the present invention will become more apparent upon reading of the following detailed description and the accompanying drawings in which:

FIG. 1 is a block diagram illustrating a hardware configuration of a video game apparatus, which is an embodiment of the present invention;
FIG. 2 is a functional block diagram illustrating a functional configuration relating to image and sound control according to this embodiment;
FIG. 3 is an example of a polygon determination table according to this embodiment;
FIG. 4 is an example of a sound element determination table according to this embodiment;
FIG. 5 is a view explaining an operation procedure between the instant when the instruction is received from the game player and the instant when the image and sound are actually controlled;
FIG. 6 is an example of a menu page for receiving the instruction from the game player;
FIG. 7 is a view explaining the operation procedure to control the image to be displayed and the sound to be outputted from the relationship between the game player's operation and the progress of the game;
FIG. 8 is a screen page example in which an image is displayed on a display device in a state that no image control is performed;
FIG. 9 is a screen page example in which an image is displayed on a display device in a state that image control is performed;

FIG. 10 is a view of a course of a one scene of a race game seen from the top;

FIG. 11 is a view illustrating the case in which an image restriction is made in accordance with the level of importance in FIG. 10;

FIG. 12 is a view illustrating the case in which the screen page similar to FIG. 10 is set such that a distance from a player's viewpoint is represented;

FIG. 13 is a view illustrating the case in which the image restriction is made in accordance with the distance from the viewpoint in FIG. 12;

FIG. 14 is a view illustrating the case in which the image restriction is made in accordance with the level of importance and the distance from the viewpoint in FIG. 10;

FIG. 15 is a view illustrating the case in which the image restriction is made in accordance with occurrence of a specific state in FIG. 10;

FIG. 16 is a view illustrating the case in which the objects, which are not displayed in FIG. 11, are unobtrusively displayed by fogging;

FIG. 17 is a view illustrating the case in which the objects, which are not displayed in FIG. 13, are unobtrusively displayed by fogging;

FIG. 18 is a view illustrating one example of a color look-up table; and

FIG. 19 is a view explaining processing at the time of restricting the image by the change in color.

## DETAILED DESCRIPTION OF THE PREFERRED EMBODIMENT

An embodiment of the present invention will be specifically described with reference to the drawings accompanying herewith. In the embodiment, the present invention is applied to an entertainment apparatus for generating data (entertainment information) based on a preset scenario, which includes at least one of an image and a sound, and for supplying the generated data to an output apparatus e.g. an display, an speaker. Furthermore, the entertainment apparatus serves as a video game apparatus.

<Configuration of video game apparatus>

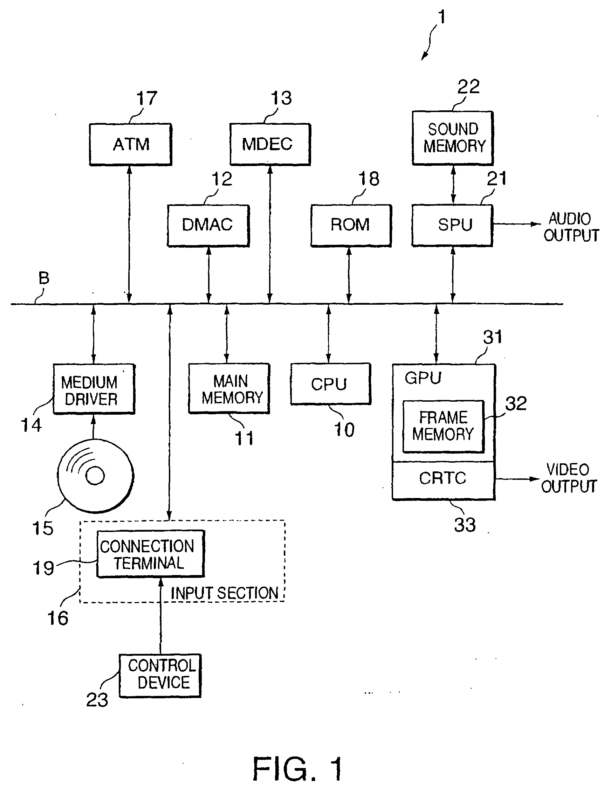

FIG. 1 is a block diagram illustrating a hardware configuration of the video game apparatus.

A video game apparatus 1 is configured such that main configuration components, which constitute the apparatus, perform data reception/transmission via a bus B. A CPU (Central Processing Unit) 10, main memory 11, a DMAC (Direct Memory Access Controller) 12, a MPEG (Moving Picture Experts Group) decoder (MDEC) 13, a medium drive 14, a communication controller (ATM) 17, ROM (Read Only Memory) 18, a SPU (Sound Processing Unit) 21, and a GPU (Graphic Processing Unit) 31 are connected to the bus B.

A storage medium 15 such as CD-ROM (Compact Disk Read Only Memory) or DVD-ROM (Digital Versatile Disk Read Only Memory) and the like can be attached and detached thereto/therefrom the medium drive 14. Sound memory 22 is connected to the SPU 21. The GPU 31 has frame memory 32, and is connected to a CTRC (Cathode Ray Tube Controller) 33.

The CPU 10 controls the entirety of the video game apparatus 1. When the video game apparatus 1 is activated, the CPU 10 reads a startup program from ROM 18 and executes it to run an OS (Operating System). When the OS runs, the operation of the medium drive 14 is controlled. In the case where the storage medium 15 is attached to the medium drive 14, the CPU 10 reads an application program or data from the storage medium 15 and causes the main memory 11 to store it. The CPU 10 advances the game in accordance with the application program stored in the main memory 11.

The CPU 10 has the following functions. Namely, when a command relating to an image display (graphic command) occurs in accordance with the progress of the game, the CPU 10 reads three-dimensional object data (coordinate values of the vertex (representative point) of polygon) that is composed of a plurality of basic polygons from the storage medium 15 or the main memory 11. The CPU 10 further provides geometry processing to the read data. After that, the CPU 10 sorts the respective polygons in order of drawing, and generates a display list described with information that defines the polygons in this order. This display list is sent to the GPU 31 with the graphic command.

The main memory 11 is composed of volatile memory such as RAM (Random Access Memory) and the like.

The DMAC 12 performs DMA (Direct Memory Access) transfer control with respect to each configuration component connected to the bus B.

The MPEG decoder 13 can operate in parallel with the CPU 10. The MPEG decoder 13 decompresses data compressed in MPEG or JPEG (Joint Photographic Experts Group) and the like.

The medium drive 14 accesses the attached storage medium 15. In this embodiment, the medium drive 14 is accessible to either standard of storage medium 15 of CD-ROM and DVD-ROM.

The input section 16 has a connection terminal 19. A control device 23 can be connected to the input section 16. The control device 23 has a plurality of control buttons and receives the button operation done by the game player, who plays the game, as an instruction from the game player, and sends it to the input section 16.

In the case where the video game apparatus 1 is connected to an outer device via a network such as a telephone line, LAN (Local Area Network) and the like, the ATM 17 controls data reception and transmission between the video game apparatus 1 and the outer device.

The ROM 18 is nonvolatile memory in which the startup program and OS are stored.

The SPU 21 reads sound data stored in the sound memory 22 in accordance with the command from the CPU 10, and generates an audio signal by performing synthesis processing. The generated audio signal is sent to a predetermined speaker or a speaker attached to a display device such as a television as one body. The sound memory 22 stores various kinds of sound data. Sound data may be stored in not only the sound memory 22 but also the storage medium 15. In this case, the SPU 21 provides synthesis processing to sound data obtained from the sound memory 22 and/or storage medium 15.

The GPU 31 retains a plurality of graphic contexts. The graphic context means a graphic setting condition that responds to the graphic command. When the GPU 31 receives the graphic command and the display list from the CPU 10, the GPU 31 reads a graphic context that responds to the graphic command and provides rendering process to the polygon described in the display list using the read graphic context. Additionally, in the case where texture mapping is performed in the rendering process, a texture pattern to be used is provided in an offscreen area of frame memory 32 in advance, and this texture pattern is used in the texture mapping.

<Functional configuration>

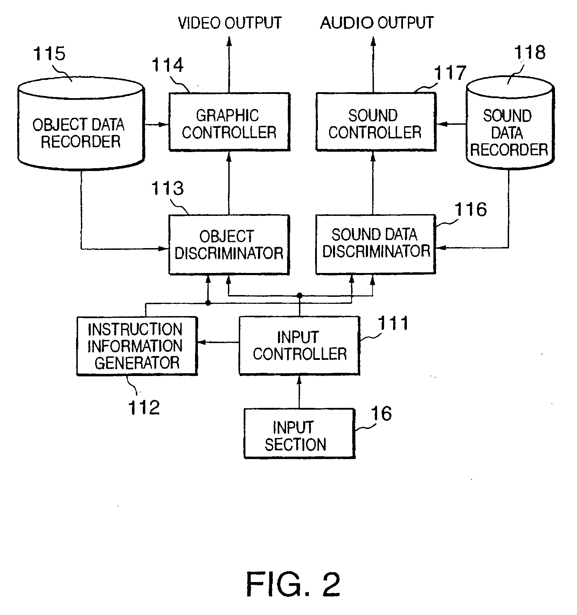

Now, functions will be explained which are created in the video game apparatus 1 by the CPU 10 alone or cooperatively with the GPU 31 and SPU 21 through execution by the CPU 10 of a game program stored in the main memory 11 or the storage medium 15. Each of the GPU 31 and SPU 21 may include a processor and a memory to form a computer. In the computer, the processor executes a program stored in the memory for inherent processing. FIG. 2 shows the functional configuration for making it possible for the game player to visually identify the image and hear the sound comfortably at the video game apparatus 1.

An input controller 111 inputs an instruction from the player via the input section 16. The input controller 111 analyzes the inputted instruction, and sends notification of the analytical result to at least one of an instruction information generator 112, an object discriminator 113 and a sound data discriminator 116.

The instruction information generator 112 controls the image displayed on the display device in accordance with the analytical result sent from the input controller 1111 and generates instruction information for controlling the sound outputted from the speaker as required, and transmits them to the object discriminator 113 and the sound data discriminator 116.

Herein, the following will explain instruction information generated by the instruction information generator 112.

First, instruction information can be divided into object instruction information for controlling the image to be displayed and sound instruction information for controlling the sound to be outputted. Moreover, these object instruction information and sound instruction information can be classified into two kinds, respectively. One is instruction information that is generated in accordance with the instruction input from the game player via a specific screen page displayable on the display device at a game starting time or during the game. The other is instruction information that is generated based on judgment from the relationship between the player's operation and the progress of the game.

Resultantly, the number of kinds of instruction information generated by the instruction generator 112 is four. Regarding instruction information generated in accordance with the instruction input from the game player via the specific screen page, object instruction information is hereinafter referred to as "first object instruction information", and sound instruction information is hereinafter referred to as "first sound instruction information." Regarding instruction information that is generated based on judgment from the relationship between the operation of the player and the progress of the game, object instruction information is hereinafter referred to as "second object instruction information", and sound instruction information is hereinafter referred to as "second sound instruction information."

The explanation is back to the functional configuration of FIG. 2. Though the instruction information generator 112 generates four kinds of instruction information as mentioned above, the generator 112 needs data for judging the progress of the game when generating second object instruction information and second sound instruction information. Such data is characteristic of the game and is read from the storage medium 15 at the time of executing the game, and is stored in the instruction information generator 112. The instruction information generator 112 may refer to data stored in the main memory 11 and the storage medium 15 anytime at the time of determination.

The object discriminator 113 receives the analytical result of the player's instruction from the input controller 111 and first object instruction information or second object instruction information from the instruction information generator 112. The object discriminator 113 performs geometry processing for displaying the image in accordance with the received analytical result. Further, when the object discriminator 113 receives first object instruction information from the instruction information generator 112, the object discriminator 113 determines whether or not the restriction on the display of the object to be displayed from now on is needed. In this case, the object discriminator 113 refers to a polygon determination table stored in an object data recorder 115. The object discriminator 113 outputs the graphic command, which complies with the determination result, and the result of geometry processing to a graphic controller 114. Moreover, in the case where the object discriminator 113 receives second object instruction information from the instruction information generator 112, the object discriminator 113 performs determination processing in accordance with a preset condition, and outputs the graphic command, which complies with the determination result, and the result of geometry processing to the graphic controller 114. It is noted that the preset condition is characteristic of the game, similar to data, which is necessary for generating second object instruction information and second sound instruction information. For this reason, the preset condition is read from the storage medium 15 at the time of executing the game, and is stored in the object discriminator 113. The object discriminator 113 may refer to the preset condition stored in the main memory 11 and the storage medium 15 anytime at the time of determination.

The graphic controller 114 provides graphic processing to the frame memory 32 in accordance with the graphic command received from the object discriminator 113 and the result of geometry processing. Since the aforementioned determination result is reflected in the graphic command, the graphic controller 114 does not necessarily draw the objects such that the game player can visually identify all objects. Regarding the graphic processing method relating to such an object that is visually identified ambiguously or cannot be visually identified by the game player, the explanation will be given later. It is noted that the graphic controller 114 refers to three-dimensional object data stored in the object data recorder 115 when performing graphic processing. Data generated by the graphic processing is converted to a signal for a video output, and the converted signal is sent to the display device as a video output.

The object data recorder 115 stores the polygon determination table to which the object discriminator 113 refers when determining whether or not the restriction on the display of the object to be displayed is needed and three-dimensional object data to which the graphic controller 114 refers when performing graphic processing. Such information is read to the object recorder 115 from the recording medium 15 at the time of reading the game program stored in the recording medium 15 and executing it.

The sound data discriminator 116 receives the analytical result of the player's instruction from the input controller 111 and first object instruction information or second object instruction information from the instruction information generator 112. The sound data discriminator 116 outputs the received analytical result to a sound controller 117. In the case where the sound data discriminator 116 receives first instruction information from the instruction information generator 112, the sound data discriminator 116 determines whether or not the restrict on the output of the sound element to be outputted from now on is needed. In this case, the sound data discriminator 116 refers to a sound element determination table stored in a sound data recorder 118. The sound data discriminator 116 outputs a sound output command, which complies with this determination result, and the analytical result sent from the input controller 111 to the sound controller 117. Moreover, in the case where the sound data discriminator 116 receives second sound instruction information from the instruction information generator 112, the sound data discriminator 116 performs determination processing in accordance with a preset condition, and outputs the sound output command, which complies with the determination result, and the analytical result to the sound controller 117. It is noted that the preset condition is characteristic of the game, similar to data, which is necessary for generating second object instruction information and second sound instruction information. For this reason, the preset condition is read from the storage medium 15 at the time of executing the game, and stored in the sound data discriminator 116. The sound data discriminator 116 may refer to the preset condition stored in the main memory 11 and the storage medium 15 anytime at the time of determination.

The sound controller 117 performs synthesis of sound data in accordance with the sound output command received from the sound data discriminator 116 and the analytical result. Since the aforementioned determination result is reflected in the synthesis of sound data, all sound elements are not always outputted such that they can be heard. The sound controller 117 uses sound data stored in the sound data recorder 118 at the time of performing the synthesis of sound data. The kind of sound includes voice, background music, effect sound and the like. The synthesized sound data is converted to a signal corresponding to the speaker to be used, and the converted signal is supplied to the speaker as an audio output.

The sound data recorder 118 stores the sound element determination table to which the sound data discriminator 116 refers when determining whether or not the restriction on the output of the sound element is needed and sound data to which the sound controller 117 refers when performing synthesis processing. Such information is read to the sound data recorder 118 from the recording medium 15 at the time of reading a game program stored in the recording medium 15 and executing it.

The above-explained functional configuration components can be associated with the block configurations illustrated in FIG. 1 as follows.

Namely, the input controller 111, instruction information generator 112, object discriminator 113, and sound data discriminator 116 can be implemented when the CPU 10 operates in accordance with a predetermined program. The graphic controller 114 can be implemented by the operations of the CPU 10 and GPU 31, and the sound controller 117 can be implemented by the operations of the CPU 10 and SPU 21. The object data recorder 115 can be implemented by the main memory 11 and recording medium 15, and the sound data recorder 118 can be implemented by the recording medium 15 and sound memory 22.

<Polygon determination table and sound element determination table>

An explanation will be next given of the polygon determination table stored in the object data recorder 115 and the sound element determination table stored in the sound data recorder 118.

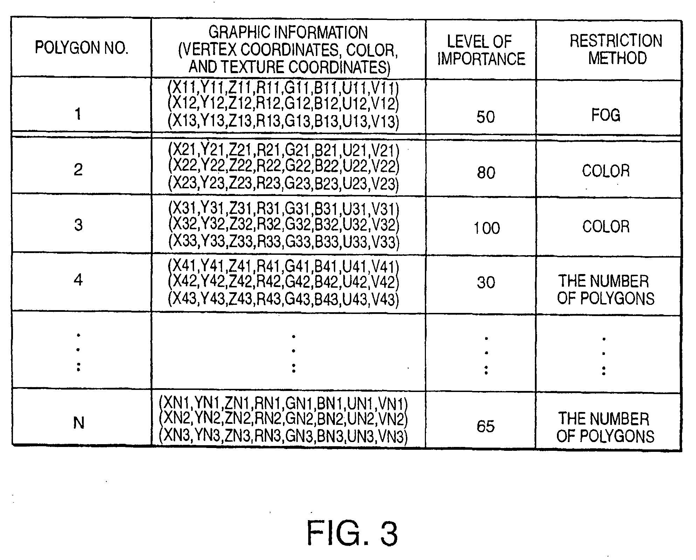

FIG. 3 shows one example of the polygon determination table. One object is drawn using a plurality of polygons. FIG. 3 shows an example of one object. Namely, N polygons (polygon Numbers 1 to N) described in this polygon determination table are those that are necessary for drawing one object. In this table, "graphic information", "level of importance", "restriction method" are stored for each polygon number to discriminate the respective polygons. Graphic information includes vertex coordinates of polygon, color, and texture coordinates. The level of importance is a value indicating how important the corresponding polygon is in terms of the progress of the game. In this embodiment, the level of importance is indicated by the numerical values 0 to 100 and the higher the level of importance, the more the numerical value increases. The restriction method is information indicating how the display of the corresponding polygon is restricted. As illustrated in the same figure, the restriction method includes "fog", "color" and "the number of polygons." Each restriction method will be described later.

This polygon determination table includes graphic information for each polygon as mentioned above. Hence, the polygon determination table illustrated in FIG. 3 takes a table format including the aforementioned three-dimensional object data.

The level of importance of the polygon determination table is decided by the creator of the game with consideration given to real enjoyment of the game at the time of authoring process.

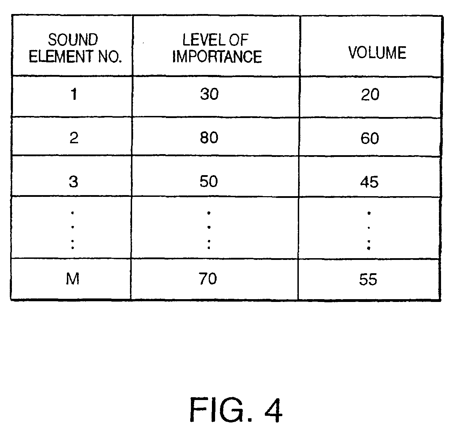

FIG. 4 shows one example of the sound element determination table. In this embodiment, in the case where a certain sound, for example, an effect sound is generated, processing for synthesizing a plurality of sound data is needed. In FIG. 4, sound data, which is necessary to generate the certain sound, is discriminated by a sound element number, and "level of importance" and "sound level" are stored for each sound element number. The level of importance is a value indicating how important the corresponding sound element is in terms of the progress of the game. As is the case with the polygon mentioned above, the level of importance is indicated by the numerical values 0 to 100 and the higher the level of importance, the more the numerical value increases. The sound level is information indicating how much sound level is needed to output the corresponding sound element. The sound level is indicated by numerical values 0 to 100, 0 indicates a minimum sound level and 100 indicates a maximum sound level.

The level of importance of the sound element determination table is decided by the creator of the game with consideration given to real enjoyment of the game at the time of authoring process.

<Image and sound control operation 1>

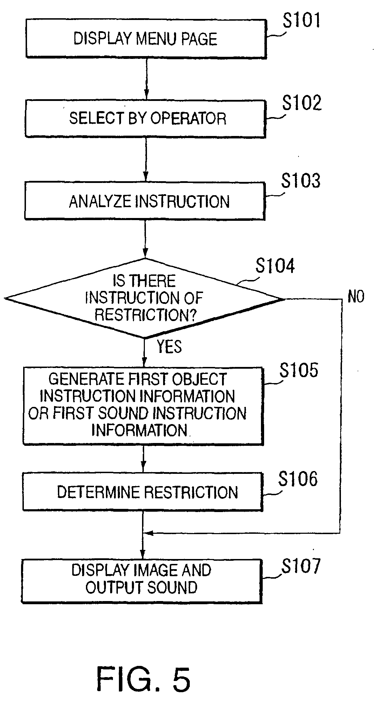

An explanation will be next given of the operation for controlling the image displayed and the sound outputted in accordance with the instruction from the game player at the video game apparatus 1. FIG. 5 is a view explaining an operation procedure between the instant when the instruction is received from the game player and the instant when the image and sound are actually controlled.

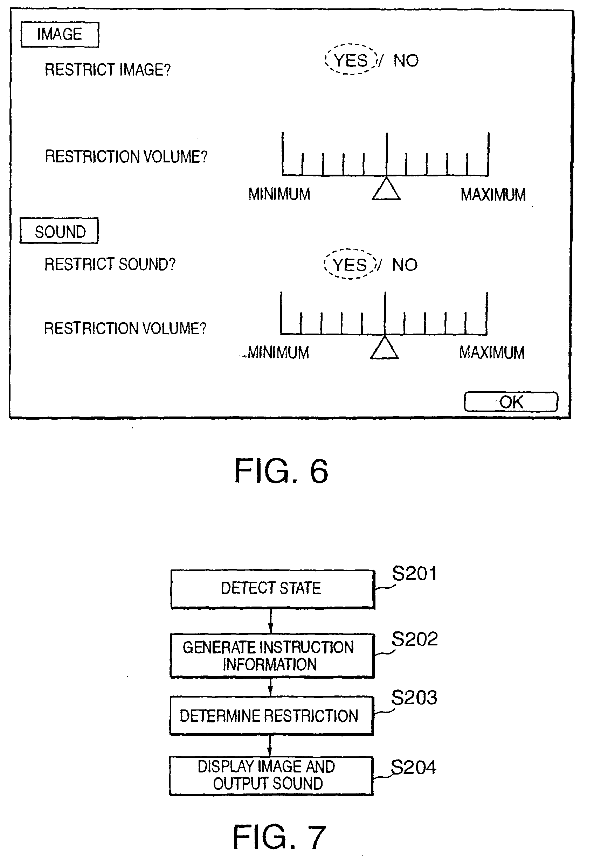

First, the recording medium 15 in which a predetermined game program (including various kinds of data) is stored is attached to the medium drive 14 of the video game apparatus 1. Then, when power is turned on, a predetermined starting screen page is displayed on the display device. On the starting screen page, an alternative for instructing the start of the game and an alternative for setting an option to perform various settings in the progress of the game, and the like are displayed. When the alternative for setting an option is selected from the plurality of alternatives and an alternative for controlling the image and sound is further selected therefrom, a menu page as illustrated in FIG. 6 is displayed (Step S101).

This menu page is displayed by power-on of the video game apparatus 1. In addition to this, the game player operates the control apparatus 23 with a predetermined procedure, so that this menu page can be displayed even when the game is in progress.

The game player operates the control apparatus 23 as referring to this menu page, making it possible to provide an instruction of ON/OFF (YES/ON) relating to the restriction on the image and that of ON/OFF (YES/ON) relating to the restriction on the sound (Step S102). Moreover, the game player can provide an instruction of the amounts of restrictions on the image and sound by moving the pointer on the gage displayed to correspond to each of the image and sound. After completing all instructions, the game player selects "OK" displayed at the lower right portion of the menu page.

When "OK" is selected by the game player, the input controller 111 receives the instruction, which the game player has provided by referring to the menu screen, via the input section 16. The input controller 111 analyzes the content of the inputted instruction in accordance with the menu page (Step S103). Herein, in the case where the inputted instruction is an instruction for controlling at least one of the image and the sound, the input controller 111 notifies the instruction information generator 112 of the analytical result (Step S104: YES). At the same time with this, the input controller 111 performs processing for displaying a next screen page to move the game forward. In the case where the inputted instruction is an instruction for controlling neither the image nor the sound, the input controller 111 does not notify the instruction information generator 112 of the analytical result (Step S104: NO).

In the case where the inputted instruction is an instruction for controlling at least one of the image and the sound, (Step S104: YES), the instruction information generator 112 generates at least one of first object instruction information and first sound instruction information in accordance with the restricting object (Step S105). In the explanation given below, it is assumed that both first object instruction information and first sound instruction information are generated. The instruction information generator 112 converts the values, which are pointed out by the pointer on the gage corresponding to the controlling targets, to the levels of importance expressed by the values of 0 to 100 in accordance with the analytical result from the input controller 111, and outputs them as first object instruction information and first sound instruction information.

More specifically, in the case where the restriction on the image is instructed, the instruction information generator 112 converts the value, which is pointed out by the pointer on the gage corresponding to the image, to the level of importance expressed by the values of 0 to 100 in accordance with the analytical result. This level of importance is sent to the object discriminator 113 as first object instruction information. In the case where the restriction on the sound is instructed, the instruction information generator 112 converts the value, which is pointed out by the pointer on the gage corresponding to the sound, to the level of importance expressed by the values of 0 to 100 in accordance with the analytical result. This level of importance is sent to the sound discriminator 116 as first sound instruction information.

After that, restriction determination processing is performed by the object discriminator 113 that has received first object instruction information and/or the sound discriminator 116 that has received first sound instruction information (Step S106).

The object discriminator 113 determines whether or not display restriction on the polygon, which is necessary for displaying the object for each displaying object, is needed when receiving first object instruction information. In this case, the object discriminator 113 refers to the polygon determination table stored in the object data recorder 115. The object discriminator 113 determines to display the polygon corresponding to the level of importance with a numeric value higher than first object instruction information. Also, the object discriminator 113 determines to restrict the display of the other polygons in accordance with the restriction methods corresponding to the other polygons. The determination result is sent to the graphic controller 114.

For example, with regard to the object illustrated in FIG. 3, in the case where first object instruction information indicates 70, the object discriminator 113 determines to display only the polygons with polygon No. 2 and polygon No. 3. Moreover, the object discriminator 113 determines to restrict the display of the other polygons in accordance with the corresponding restriction methods. In this case, it is assumed that any level of importance up to polygons No. 5 to No. N-1 is under 70 though they are not illustrated.

The sound data discriminator 116 determines whether or not output restriction on the sound element, which is necessary for outputting the sound for each outputting sound, is needed when receiving first sound instruction information. In this case, the sound data discriminator 116 refers to the sound element determination table stored in the sound data recorder 118. The sound data discriminator 116 determines to normally output the sound element corresponding to the level of importance with a numeric value higher than first sound instruction information. Also, the sound data discriminator 116 determines to restrict the other sound elements in accordance with the corresponding sound levels. The determination result is sent to the sound controller 117.

For example, with regard to the sound illustrated in FIG. 4, in the case where first sound instruction information indicates 70, the sound data discriminator 116 determines to normally output the sound elements with sound element No. 2 and sound element No. M. Moreover, the sound data discriminator 116 determines to restrict the other sound elements in accordance with the corresponding sound levels. In this case, it is assumed that any level of importance up to sound elements No. 4 to No. M-1 is under 70 though they are not illustrated.

After performing such restriction determinations, the display of image and the output of sound are carried out by the image controller 114 and the sound controller 117 (Step S107).

The graphic controller 114 performs graphic processing using graphic information (three-dimensional object data) stored in the object data recorder 115. In this case, the graphic controller 114 carries out the restriction on the display of the polygons in accordance with the determination result sent from the object discriminator 113. As the polygon restriction method, the method stored in the polygon determination table is used. Data generated by graphic processing is converted to a signal for a video output and the converted signal is supplied to the display device.

The sound controller 117 performs synthesis of sound data stored I the sound data recorder 118. In this case, the sound controller 117 carries out the restriction on the output of the sound in accordance with the determination result sent from the sound data discriminator 116. Regarding the restriction on the output of the sound, the sound level is controlled in such a way to be smaller than the sound level, which is normally outputted in accordance with the sound level stored in the sound element determination table. Synthesized sound data is supplied to the speaker.

By the above-explained processing, the displaying image and the outputting sound are restricted in accordance with the instruction from the game player. This makes it possible for the game player to control the displaying image and the outputting sound in accordance with the player's preference and physical condition, and to enjoy the game comfortably.

The results determined at the object discriminator 113 and sound data discriminator 116 continuously become effective during the game. In order to change the results, it is needed that the player should operate the control apparatus 23 with a given procedure to display the menu page, and provide an instruction via this menu page as mentioned above.

<Image restriction method>

An explanation will be next given of some specific methods for restricting the image.

(1) Control of the number of polygons

The number of polygons that form the object is restricted. As mentioned above, one object is made up of the plurality of kinds of polygons. For this reason, control is performed not to draw the specific polygon, thereby reducing the whole number of polygons that form the object.

(2) Change of color

A color to be added to the object is changed. The color set to the object is changed to the color similar to the color of the periphery where the object is positioned or the background color. The outline of the object may be unclearly blurred. In this case, the depth of focus from the game player becomes smaller in the displayed object, thereby bringing the effect that the game player feels that the object is out of focus.

(3) Fog

A drawing object is fogged. An object to be fogged is drawn in the drawing area of the target object. Also, a target object and an object to be fogged are synthesized in advance, and the resultant is drawn. The color of the object to be fogged and the transmittance are changed, making it impossible for the game player to visually identify the target object to be displayed.

(4) No display

The object itself is not drawn at all, so that no object is completely displayed on the screen page.

Accordingly, by these image restriction methods, the game player views the object displayed on the display device in the blurred form and cannot recognize it.

<Image and sound control operation 2>

An explanation will be next given of the operation for controlling the image to be displayed and the sound to be outputted based on the relationship between the game player's operation and the progress of the game. FIG. 7 is a view to explain the procedure for this operation.

The instruction information generator 112 monitors the game player's operation and the progress of the game at any time when the game is started (Step S201). The instruction information generator 112 generates second object instruction information and/or second sound instruction information when determining that a specific state occurs while monitoring the game player's operation and the progress of the game (Step S202).

In the case where the game is a driving game in which the game player derives a car, the instruction information generator 112 monitors elements such as current vehicle speed, a visual field, and the like. In the case where these elements satisfy a preset condition, the instruction information generator 112 determines that the aforementioned specific state occurs. Accordingly, the monitored elements and the specific state are characteristic of the game.

The instruction information generator 112 generates second object instruction information and/or second sound instruction information indicative of the specific state occurred. Since the generation of information is based on the specific state, both second object instruction information and second sound instruction information are not always generated. In the explanation given below, it is assumed that both second object instruction information and second sound instruction information are generated.

Generated second object instruction information is sent to the object discriminator 113 and second sound instruction information is sent to the sound data discriminator 116, and restriction determination processing is carried out at each of second object instruction information and second sound instruction information (Step S203).

When the object discriminator 113 receives second object instruction information, the object discriminator 113 determines whether or not the restriction on the display of each object is needed based on a preset condition prestored in accordance with the specific state indicated by second object instruction information. With respect to the determined object to which the display restriction is needed, the object discriminator 113 further determines which polygon should be restricted by referring to the polygon determination table stored in the object data recorder 115. For example, it is assumed that the polygon that forms the object, which is a display controlling target, is one that is illustrated in FIG. 3. The object discriminator 113 compares the polygon with the other polygons in the level of importance based on a reference level of importance of 80, and determines whether or not display control is needed. The determination result is sent to the graphic controller 114. The determination as to whether or not the restriction is needed according to such a determination condition and the specific examples of the result will be explained later with reference to a bird's-eye view at the race game.

When the sound data discriminator 116 receives second sound instruction information, the sound data discriminator 116 determines whether or not the restriction on the output of each sound is needed based on a preset condition prestored in accordance with the specific state indicated by second sound instruction information. For example, it is assumed that the sound element that forms the sound, which is an output controlling target, is one that is illustrated in FIG. 4. The sound data discriminator 116 compares the sound element with the other sound elements in the level of importance based on a reference level of importance of 80, and determines whether or not output control is needed. The determination result is sent to the sound controller 117.

The graphic controller 114 performs processing for restricting the display of the image in accordance with the determination result sent from the object discriminator 113, and the sound controller 117 performs processing for restricting the output of the sound in accordance with the determination result sent from the sound data discriminator 117 (Step S204). Such processing is the same as the processing in Step S107 of FIG. 5, and the specific explanation is omitted.

By the aforementioned processing, the displaying image and the outputting sound are restricted based on the relationship between the game player's operation and the progress of the game. This makes it possible for the game player to enjoy the game comfortably.

An explanation will be next given of an example of a page screen when restriction processing is performed in accordance with the procedure illustrated in FIG. 5 or FIG. 7.

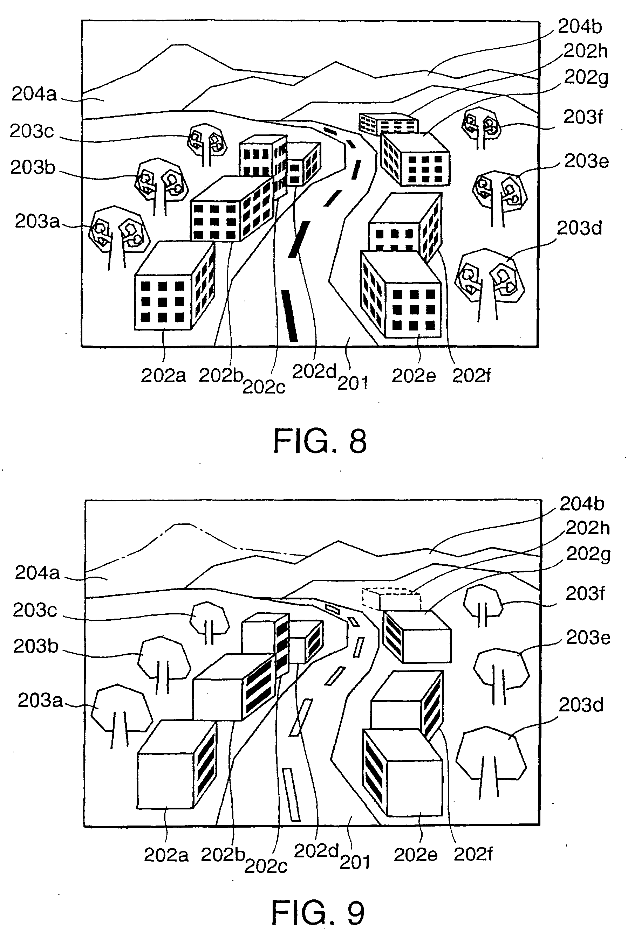

FIG. 8 illustrates one scene of a race game. On this page, a road 201, which is the course of a race, is displayed to be extended from the lower portion to the upper portion at the center of the page. Buildings 202a to 202h are displayed to be positioned along the road 201, and trees 203a to 203f are also displayed to be positioned at the outside of the buildings. Moreover, mountain ranges 204a and 204b are displayed as a part of background on the upper portion of the page. The page as illustrated in FIG. 8 is one that is displayed on the display device when no instruction information is generated by the instruction information generator 112. It is noted that road 201, buildings 202a to 202h, trees 203a to 203f, and mountain ranges 204a and 204b can be defined as objects, respectively.

In the case where restriction processing is performed in accordance with the procedure illustrated in FIG. 5 or FIG. 7, the screen page as illustrated in FIG. 8 should have been originally displayed on the display device, but the screen page as illustrated in FIG. 9 is actually displayed thereon.

In FIG.9, the color of a centerline indicative of the center of the road 201 is changed. This is changed to the same color as the other parts of the road 201 by the aforementioned color change. In the buildings 202a to 202g, windows positioned along the road 201 are connected to one another in a transverse direction, and windows positioned at the surface perpendicular to the direction of the road 201 are eliminated. This shows the result of processing in which the control in the number of polygons, the change in color, and the fog are combined. The building 202h is made to disappear by the fog. The trees 203a to 203f are simplified by the control in the number of polygons, and the simplification result is displayed. The mountain range 204a is displayed so that its outline becomes blurred by the change in color.

As explained above, this embodiment makes it possible for the user of the video game apparatus 1 to visually identify the image and hear the sound comfortably.

An explanation will be next given of some examples of image control.

<Specific example 1>

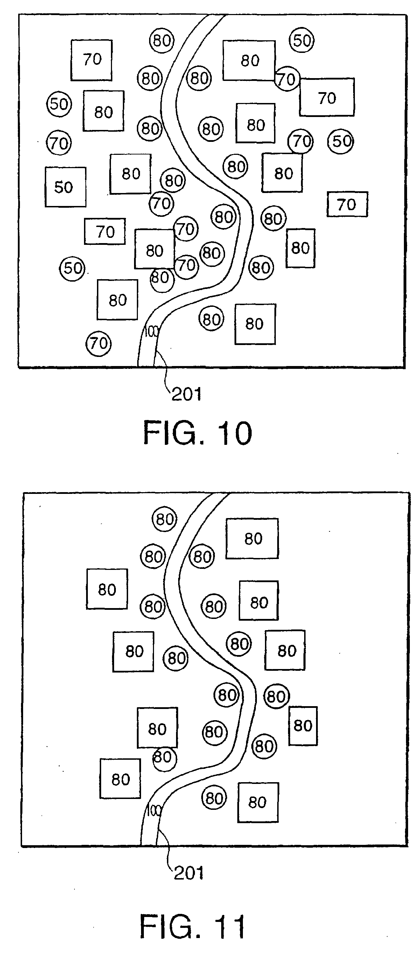

FIG. 10 is a view of one scene of the race game seen from the top. In this figure, buildings (squares) and trees (circles) are illustrated around the road 201. Numeric values described in the squares and circles indicate the levels of importance of the respective objects. These numeric values are those that are set by the creator of the game.

Herein, the objects, which are displayed when the instruction of the image restriction is sent from the game player and processing that complies with the procedure illustrated in FIG. 5 is performed, are illustrated as in FIG. 11. This shows the case in which the numeric value of 75 is obtained when the instruction sent from the game player is converted to the level of importance. Namely, only objects, each having the level of importance exceeding 75, are displayed.

The above has explained the specific example in which control is provided to the image displayed in accordance with the instruction from the game player.

<Specific example 2>

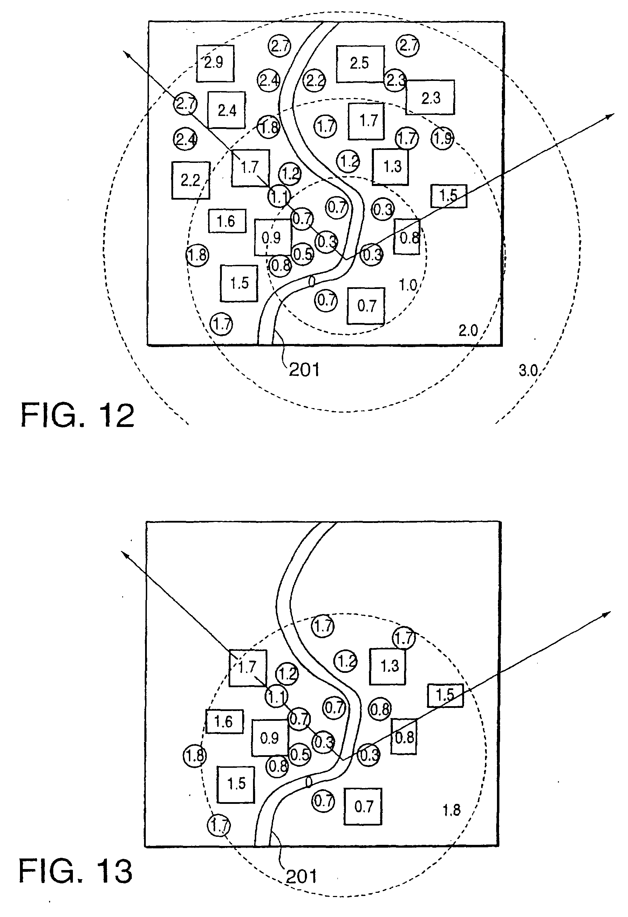

FIG. 12 illustrates the same scene as that of the FIG. 10. Herein, the player's viewpoint is indicated by a point of intersection of two arrows. The numeric values described in the squares or circles are those that are relatively indicative of the distance between the game player's viewpoint and the object.

Herein, it is assumed that the instruction information generator 112 detects occurrence of the specific state during the progress of the game. Particularly, supposing that the instruction information generator 112 determines occurrence of the specific state since the velocity of the vehicle that is operated by the game player becomes a value less than a predetermined velocity. Resultantly, the object, which is displayed when processing is performed in accordance with the aforementioned procedure illustrated in FIG. 7, is illustrated in FIG. 13. In processing that complies with the procedure, the object discriminator 113 performs the display determination of each object according to a preset condition in response to occurrence of the specific state (vehicle velocity is low). The above preset condition is that only the object whose distance from the viewpoint is closer than 1. 8 is displayed. It is noted that the road 201 is displayed regardless of the position of viewpoint on the assumption that the distance of the road 201 from the viewpoint is always 0. The above has explained the specific example in which control is provided to the image displayed in accordance with the relationship between the game player's operation and the progress of the game.

<Specific example 3>

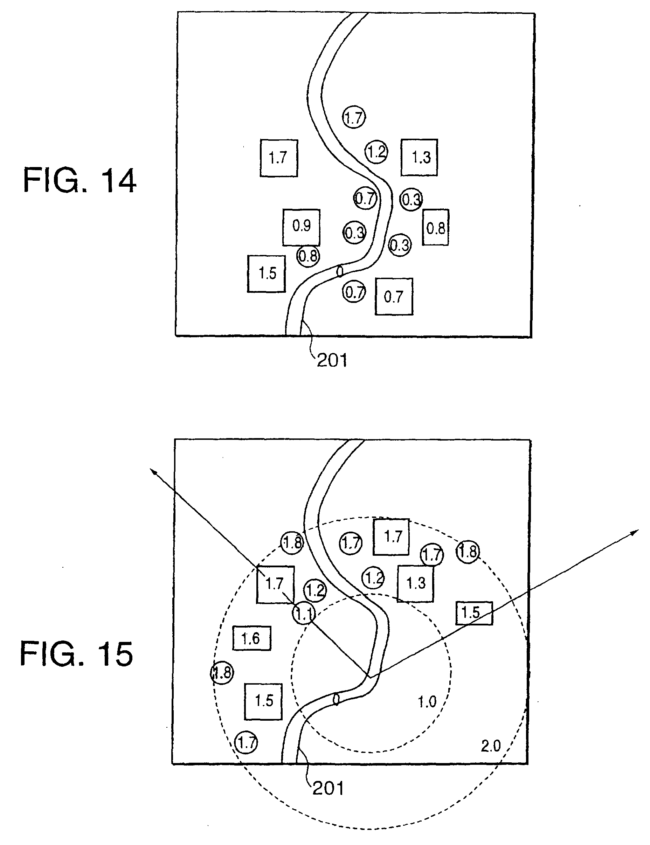

FIG. 14 is a view explaining the case in which specific examples 1 and 2 are combined. Namely, this is the view illustrating the state in which control is provided to the image to be displayed in accordance with the instruction from the game player and control is also provided to the image in accordance with the relationship between the player's operation and the progress of the game.
This figure shows the state that only the objects, each having level of importance exceeding 75 and the distance from the viewpoint being closer than 1.8, are displayed.

<Specific example 4>

FIG. 15 is a view showing the case in which the course is seen from the top similar to FIGS. 10 to 14. More specifically, FIG. 15 shows the case in which the instruction information generator 112 detects that the vehicle velocity is increased at a predetermined increasing rate and the image is controlled in accordance with the detected specific state. In response to the detection of the specific state, the object discriminator 113 controls the display of the image according to a preset condition. The preset condition is that only the object, which is positioned within the distance from the viewpoint is 1.0 to 2.0, is displayed. Such an image restriction makes it possible to prevent the object, which is too close to the viewpoint, from being displayed. It is assumed that the object close to the viewpoint is displayed when the speed is high. This normally obstructs the game player's grasping the state of the object away from the viewpoint. Accordingly, the aforementioned image restriction makes it possible to eliminate inconvenience to the game player, allowing a comfortable operational environment to be provided to the game player. It is noted that the method that does not draw the object itself and the fog can be applied to the image restriction method of specific example 4.

<Specific example 5>

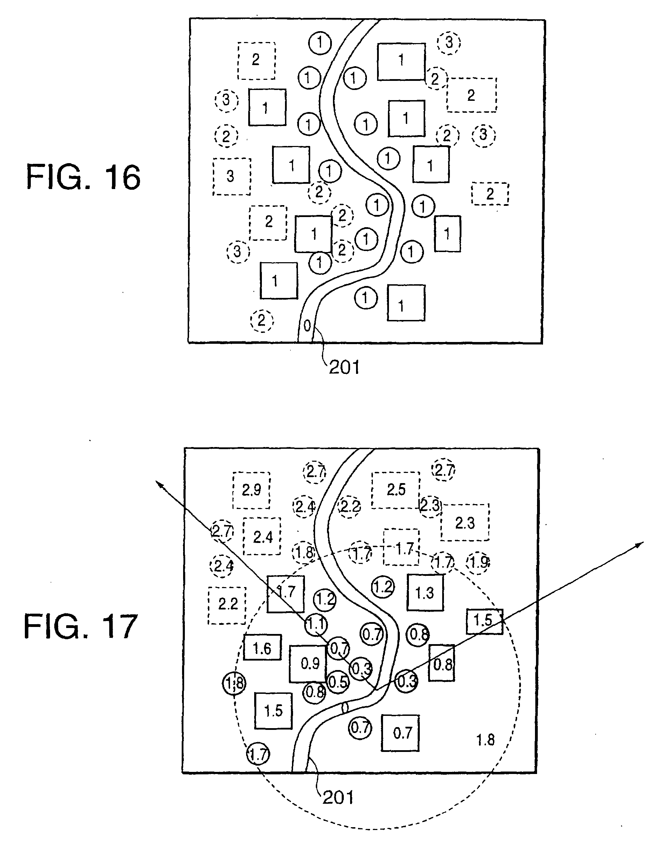

FIG. 16 illustrates an example in which the objects, which are not displayed in FIG. 11, are unobtrusively displayed by fogging. In the squares and circles, the levels of importance are described by numerical values 0 to 3. Herein, it is assumed that the smaller value is, the higher the level of importance becomes.
The fog is carried out by mixing the object original color and the fog color. FIG. 16 shows the case in which one kind of the object original color and that of the fog color are mixed. However, if a mixing coefficient is changed in accordance with the level of importance and a difference in a restriction index, the density of fog can be continuously changed. The following expression shows one example of calculation for changing the mixing coefficient.

$$Alpha = (Importance - Limitation) / Depth$$

$$if\ (Alpha > 1)\ Alpha = 1$$

$$if\ (Alpha < 0)\ Alpha = 0$$

$$COL = COLfog*Alpha + COLobj*(1 - Alpha)$$

where Alpha: $\alpha$ value (opacity), Importance: a level of importance added to the object, Limitation: value obtained by converting degree of restriction instructed from the game player to numeric values of 0 to 3, Depth: a difference in an index between the instance when the fog is started and the instance when the object disappears, COLfog: a color added to the fog (color separation value), COLobj: a color added to the object (color separation value), and when 0 < Alpha < 1, COL is calculated using the direct numerical values.
When Importance is smaller than Limitation, COL = COLobj is established. When Importance is larger than Limitation + Depth, COL = COLfog is established. When Importance is an intermediate value, a color in which COLfog and COLobj are mixed can be obtained.

<Specific example 6>

FIG. 17 is a view illustrating the result obtained by performing the same processing as that of specific example 5 in connection with the distance from the game player's viewpoint. In this case, the ratio of fog increases as the object is positioned away from the viewpoint, with the result that the object is unobtrusively displayed.

<Specific example 7>

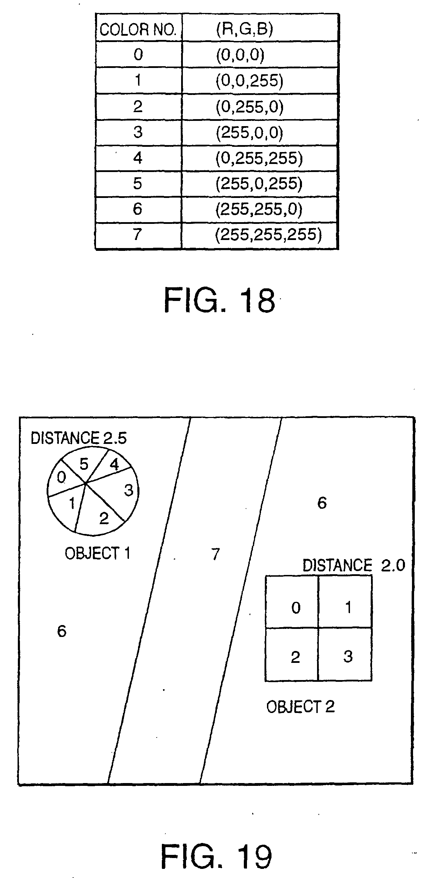

FIG. 18 and FIG. 19 are views explaining the specific examples for restricting the image by the change in color. FIG. 18 illustrates a color look-up table, and FIG. 19 illustrates objects 1 and 2 displayed on the screen page and color numbers assigned to the respective objects and a color number assigned to a background. Namely, the objects and background displayable on this screen page are converted to the corresponding RGB values based on the assigned color numbers, and graphic processing is performed in accordance with the RGB values. For example, No. 0 assigned to the part of each of the objects 1 and 2 indicates (0, 0, 0) (black), and No. 1 assigned thereto indicates (0, 0, 255) (blue).

Herein, the color assigned to each object is changed by the following expression.

$$\text{Alpha} = (\text{Distance 1} - \text{Distance 2}) / \text{Depth}$$

$$\text{if (Alpha > 1) Alpha} = 1$$

$$\text{if (Alpha < 0) Alpha} = 0$$

$$\text{COL} = \text{COLfog}*\text{Alpha} + \text{COLobj}*(1 - \text{Alpha})$$

where Distance 1: a distance between the game player's viewpoint and the object, Distance 2: a distance between the game player's viewpoint and a point where the fog is started, and other variables are the same as those of specific example 5.

Colors Nos. 0 to 5 are assigned to the object 1. The color Number assigned to the background of the object 1 is 6. Then, colors Nos. 0 to 5 are changed. For instance, if color No. 1 = (0, 0, 0), color No. 6 = COLbg, distance 1 = 2.5, distance 2 = 1.8 and depth = 1. 0, the following expression is given:

$$\text{Alpha} = (2.5 - 1.8) / 1.0 = 0.7$$

$$\text{if (Alpha > 1) Alpha} = 1$$

$$\text{if (Alpha < 0) Alpha} = 0$$

$$\text{COL} = (0,0,255)*0.7 + (0,0,0)(1-0.7) = (0,0,178).$$

Similarly, if colors Nos. 1 to 5 are changed, the object 1 has nearness that complies with the background color and the distance, and becomes unobtrusive. For drawing the object 2, colors Nos. 0 to 3 are changed according to the distance. When the object is put on another background, the aforementioned calculation may be performed using the background color.

The use of several specific examples makes it possible to perform various image restrictions. Additionally, it is possible to make one fog unobtrusive by combining the plurality of restriction methods such as a combination of the fog and the color change. Though specific examples 3 and 4 have explained the image control that complies with the vehicle velocity, the restriction on the sound can be also carried out. For example, in the case where the vehicle velocity is low, control can be performed to increase the sound relating to the background music and scenery, and in the case where the vehicle velocity is high, control can be performed to increase an engine sound.

Though four kinds of instruction information are generated by the instruction information generator 112, the number of instruction information may be restricted to any one of four kinds of instruction information or a plurality thereof as required. The method for restricting each polygon may be set by the game player. In this case, it is needed that the instruction be received from the game player to the extent that enjoyment of the game is not lost. The respective restriction methods may be selected using a flowchart in an algorithmic way without specifying them by the polygon determination table.

Processing illustrated in FIG. 5 and/or FIG. 7 can be implemented by causing the CPU 10 to execute a program stored in the recording medium and a program downloaded via a network.

Though this embodiment has used the video game apparatus as an entertainment apparatus, the present invention can be applied to an electronic device except the entertainment apparatus, and a computer system. Furthermore, the present invention can be applied to an image reproducing apparatus for personal use, which irrelevant to a game. In this case, the specific state is determined from the progress of the provided image, music and scenario in place of the game player's operation and the progress of the game.

Moreover, in the functional block illustrated in FIG. 2, the main functions are created by CPU 10, SPU 21, and GPU 31. However, they can be created by a one-chip semiconductor device having all these functions. In this case, the computer program may be stored in a memory embodied in the semiconductor device in advance or later.

The aforementioned functions created by the SPU 21 and GPU 31 can be created by a one-chip semiconductor device or one processor. Therefore, the above embodiment can be implemented by two processors.

The aforementioned functions may be created in a general-purpose computer. In this case, a computer program for creating the functions is stored in a computer readable storage medium and the stored computer program is installed on the computer during system constructing. The computer program may be a downloadable program via a network.

As explained above, the present invention can provide the technique for making it possible for the user to visually identify the image and to hear the sound comfortably and the entertainment apparatus using the technique.

Various embodiments and changes may be made thereunto without departing from the broad spirit and scope of the invention. The above-described embodiment intended to illustrate the present invention, not to limit the scope of the present invention. The scope of the present invention is shown by the attached claims rather than the embodiment. Various modifications made within the meaning of an equivalent of the claims of the invention and within the claims are to be regarded to be in the scope of the present invention.

**Claims**

1. An information processing apparatus connectable to an output apparatus for outputting information, the information processing apparatus comprising:

   a first processor for generating instruction information in accordance with a restriction request from a user on an information output from the output apparatus;
   a second processor for generating data reflecting the instruction information, in accordance with a preset condition; and
   a data feeder for feeding the generated data to the output apparatus so that the output apparatus outputs information in accordance with the fed data.

2. The information processing apparatus according to claim 1, wherein the information comprises at least one of an image and a sound.

3. The information processing apparatus according to claim 2, wherein the first processor generates the instruction information indicating a degree of restriction according to the restriction request, and the second processor compares the instruction information with information assigned to the at least one of an image and a sound in advance and indicating a degree of necessity for outputting and generates the data according to a comparison result.

4. The information processing apparatus according to claim 2, further comprising a memory for storing levels of importance indicating degrees of necessity for displaying for each of configuration components that form the image, wherein the first processor generates the instruction information indicating a degree of the restriction request, and the second processor compares a degree of level of importance for each configuration component with reference to the memory and restricts the image according to the comparison result.

5. The information processing apparatus according to claim 4, wherein the second processor generates the data in order to restrict the configuration component whose degree of the level of importance is lower than that of the instruction information using at least one of processing for reducing the number of elements that form the configuration components, processing for changing colors assigned to the configuration elements in advance, processing for synthesizing the configuration components with a fog, and processing for erasing the configuration components.

6. The information processing apparatus according to claim 2, further comprising a memory for storing levels of importance indicating degrees of necessity for outputting for each of sound elements that form the sound, wherein the first processor generates the instruction information indicating a degree of the restriction request, and the second processor compares a degree of level of importance for each sound element with reference to the memory and generates the data according to the comparison result.

7. The information processing apparatus according to claim 6, wherein the second processor generates the data in order that a sound level outputted from the output apparatus is reduced in connection with the sound element where the degree of the level of importance is lower than that of the instruction information.

8. A method executed in an information processing apparatus connectable to an output apparatus for outputting information, the method comprising the steps of:

   generating instruction information in accordance with a restriction request from a user on an information output from the output apparatus;
   generating data reflecting the instruction information, in accordance with a preset condition; and
   feeding the generated data to the output apparatus so that the output apparatus outputs information in accordance with the fed data.

9. A computer program operational on a computer, the computer connectable to an output apparatus for outputting information, the computer program comprising the steps of:

generating instruction information in accordance with a restriction request from a user on an information output from the output apparatus;
generating data reflecting the instruction information, in accordance with a preset condition; and
feeding the generated data to the output apparatus so that the output apparatus outputs information in accordance with the fed data.

10. The computer program according to claim 9, wherein the computer program is stored in a computer readable storage medium.

11. A storage medium having computer readable program code means embodied in a medium, the computer readable program code means comprising:

computer readable program code means for generating instruction information in accordance with a restriction request from a user on an information output from an output apparatus;
computer readable program code means for generating data reflecting the instruction information, in accordance with a preset condition; and
computer readable program code means for feeding the generated data to the output apparatus so that the output apparatus outputs information in accordance with the fed data.

12. A semiconductor device provided in an information processing apparatus, the information processing apparatus connectable to an output apparatus for outputting information, the semiconductor device comprising:

means for generating instruction information in accordance with a restriction request from a user on an information output from the output apparatus;
means for generating data reflecting the instruction information, in accordance with a preset condition; and
means for feeding the generated data to the output apparatus so that the output apparatus outputs information in accordance with the fed data.

13. An information processing apparatus connectable to an output apparatus for outputting information to a user and to an input apparatus for receiving an operation by the user, the information processing apparatus comprising:

a generator for generating data indicating information and supplying the generated data to the output apparatus, whereby providing information that complies with a predetermined scenario to the user;
a first processor for detecting an occurrence of a specific state according to an instruction input from the user via the input apparatus and the progress of the scenario; and
a second processor for restricting generation of the data indicating the information by the generator according to a preset condition when the specific state occurs.

14. The information processing apparatus according to claim 13, wherein the information comprises at least one of an image and a sound.

15. The information processing apparatus according to claim 14, wherein the second processor generates the instruction information indicating a degree of restriction according to the specific state and compares the instruction information with information assigned to the at least one of an image and a sound in advance and indicating a degree of necessity for outputting, and restricts the generating of data by the generator according to the comparison result.

16. The information processing apparatus according to claim 14, further comprising a memory for storing levels of importance indicating degrees of necessity for displaying for each of configuration components that form the image, wherein the second processor generates the instruction information indicating a degree of the restriction request and compares a degree of level of importance for each configuration component with reference to the memory, and restricts the generating of data by the generator according to the comparison result.

17. The information processing apparatus according to claim 16, wherein the second processor restricts the generating of data by the generator in order to restrict the configuration component whose degree of the level of importance is lower than that of the instruction information using at least one of processing for reducing the number of elements that form the configuration components, processing for changing colors assigned to the configuration elements in advance, processing for synthesizing the configuration components with a fog, and processing for erasing the configuration components.

18. The information processing apparatus according to claim 14, further comprising a memory for storing levels of importance indicating degrees of necessity for outputting for each of sound elements that form the sound, wherein the second processor generates the instruction information indicating a degree of the restriction request and compares a degree of level of importance for each sound element with reference to the memory, and restricts the generating of data by the generator according to the comparison result.

19. The information processing apparatus according to claim 18, wherein the second processor restricts the generating of data by the generator such that a sound level outputted from the output apparatus is reduced in connection with the sound element where degree of the level of importance is lower than that of the instruction information.

20. The information processing apparatus according to claim 14, wherein when the predetermined scenario is for a moving object operation game, the first processor detects an occurrence of the specific state according to at least one of a velocity of a moving object that is operated by the user, a viewpoint of the user, and a visual field of the user.

21. A method executed in an information processing apparatus connectable to an output apparatus for outputting information to a user and an input apparatus for receiving an operation by the user, the method comprising the steps of:

> generating data indicating information and supplying the generated data to the output apparatus, whereby providing information that complies with a predetermined scenario to the user; detecting an occurrence of a specific state according to an instruction input from the user via the input apparatus and the progress of the scenario; and restricting generation of the data indicating the information by the generator according to a preset condition when the specific state occurs.

22. A computer program operational on a computer, the computer connectable to an output apparatus for outputting information to a user and to an input apparatus for receiving an operation by the user, the computer program comprising the steps of:

> generating data indicating information and supplying the generated data to the output apparatus, whereby providing information that complies with a predetermined scenario to the user;

detecting an occurrence of a specific state according to an instruction input from the user via the input apparatus and the progress of the scenario; and restricting generation of the data indicating the information by the generator according to a preset condition when the specific state occurs.

23. The computer program according to claim 22, wherein the computer program is stored in a computer readable storage medium.

24. A storage medium having computer readable program code means embodied in a medium, the computer readable program code means comprising:

> computer readable program code means for generating data indicating information and supplying the generated data to an output apparatus, whereby providing information that complies with a predetermined scenario to a user; computer readable program code means for detecting an occurrence of a specific state according to an instruction input from the user via the input apparatus and the progress of the scenario; and computer readable program code means for restricting generation of the data indicating the information by the generator according to a preset condition when the specific state occurs.

25. A semiconductor device provided in an information processing apparatus, the information processing apparatus connectable to an output apparatus for outputting information to a user and to an input apparatus for receiving an operation by the user, the semiconductor device comprising:

> means for generating data indicating information and supplying the generated data to the output apparatus, whereby providing information that complies with a predetermined scenario to the user; means for detecting an occurrence of a specific state according to an instruction input from the user via the input apparatus and the progress of the scenario; and means for restricting generation of the data indicating the information by the generator according to a preset condition when the specific state occurs.

FIG. 1

VIDEO OUTPUT   AUDIO OUTPUT

115   114   117   118

OBJECT DATA RECORDER → GRAPHIC CONTROLLER    SOUND CONTROLLER ← SOUND DATA RECORDER

113   116

OBJECT DISCRIMINATOR   SOUND DATA DISCRIMINATOR

INSTRUCTION INFORMATION GENERATOR ← INPUT CONTROLLER   111

112

INPUT SECTION   16

FIG. 2

| POLYGON NO. | GRAPHIC INFORMATION (VERTEX COORDINATES, COLOR, AND TEXTURE COORDINATES) | LEVEL OF IMPORTANCE | RESTRICTION METHOD |
|---|---|---|---|
| 1 | (X11,Y11,Z11,R11,G11,B11,U11,V11)<br>(X12,Y12,Z12,R12,G12,B12,U12,V12)<br>(X13,Y13,Z13,R13,G13,B13,U13,V13) | 50 | FOG |
| 2 | (X21,Y21,Z21,R21,G21,B21,U21,V21)<br>(X22,Y22,Z22,R22,G22,B22,U22,V22)<br>(X23,Y23,Z23,R23,G23,B23,U23,V23) | 80 | COLOR |
| 3 | (X31,Y31,Z31,R31,G31,B31,U31,V31)<br>(X32,Y32,Z32,R32,G32,B32,U32,V32)<br>(X33,Y33,Z33,R33,G33,B33,U33,V33) | 100 | COLOR |
| 4 | (X41,Y41,Z41,R41,G41,B41,U41,V41)<br>(X42,Y42,Z42,R42,G42,B42,U42,V42)<br>(X43,Y43,Z43,R43,G43,B43,U43,V43) | 30 | THE NUMBER OF POLYGONS |
| ⋮ | ⋮ | ⋮ | ⋮ |
| N | (XN1,YN1,ZN1,RN1,GN1,BN1,UN1,VN1)<br>(XN2,YN2,ZN2,RN2,GN2,BN2,UN2,VN2)<br>(XN3,YN3,ZN3,RN3,GN3,BN3,UN3,VN3) | 65 | THE NUMBER OF POLYGONS |

# FIG. 3

EP 1 161 975 A2

| SOUND ELEMENT NO. | LEVEL OF IMPORTANCE | VOLUME |
|:---:|:---:|:---:|
| 1 | 30 | 20 |
| 2 | 80 | 60 |
| 3 | 50 | 45 |
| ⋮ | ⋮ | ⋮ |
| M | 70 | 55 |

# FIG. 4

```
┌─────────────────────────┐
│    DISPLAY MENU PAGE     │─── S101
└─────────────────────────┘
             │
             ▼
┌─────────────────────────┐
│    SELECT BY OPERATOR    │─── S102
└─────────────────────────┘
             │
             ▼
┌─────────────────────────┐
│   ANALYZE INSTRUCTION    │─── S103
└─────────────────────────┘
             │
             ▼
        ╱ IS THERE ╲                      S104
      ╱ INSTRUCTION OF ╲─────────────────────── NO
        ╲ RESTRICTION? ╱                         │
          ╲         ╱                            │
             │ YES                               │
             ▼                                   │
┌─────────────────────────┐                      │
│  GENERATE FIRST OBJECT   │─── S105             │
│  INSTRUCTION INFORMATION │                     │
│ OR FIRST SOUND INSTRUCTION│                    │
│      INFORMATION         │                     │
└─────────────────────────┘                      │
             │                                   │
             ▼                                   │
┌─────────────────────────┐                      │
│  DETERMINE RESTRICTION   │─── S106             │
└─────────────────────────┘                      │
             │◄──────────────────────────────────┘
             ▼
┌─────────────────────────┐
│    DISPLAY IMAGE AND     │─── S107
│      OUTPUT SOUND        │
└─────────────────────────┘
```

# FIG. 5

IMAGE

RESTRICT IMAGE?                          YES / NO

RESTRICTION VOLUME?

MINIMUM                    MAXIMUM

SOUND

RESTRICT SOUND?                          YES / NO

RESTRICTION VOLUME?

MINIMUM                    MAXIMUM

OK

# FIG. 6

DETECT STATE — S201

GENERATE INSTRUCTION INFORMATION — S202

DETERMINE RESTRICTION — S203

DISPLAY IMAGE AND OUTPUT SOUND — S204

# FIG. 7

FIG. 8

FIG. 9

FIG. 10

FIG. 11

FIG. 12

FIG. 13

FIG. 14

FIG. 15

FIG. 16

FIG. 17

| COLOR NO. | (R,G,B) |
|-----------|-----------------|
| 0 | (0,0,0) |
| 1 | (0,0,255) |
| 2 | (0,255,0) |
| 3 | (255,0,0) |
| 4 | (0,255,255) |
| 5 | (255,0,255) |
| 6 | (255,255,0) |
| 7 | (255,255,255) |

# FIG. 18

FIG. 19